# EUROPEAN PATENT SPECIFICATION

(11) **EP 4 108 365 B1**
(45) Date of publication and mention of the grant of the patent: **28.10.2026**
(21) Application number: 22165006.2
(22) Date of filing: 29.03.2022
(51) Int. Cl.: B23B 27/04, B23B 27/14

(54) **CUTTING INSERT**
SCHNEIDEINSATZ
INSERT DE DÉCOUPE

(30) Priority: 25.06.2021 JP 2021105847
(43) Date of publication of application: 28.12.2022
(73) Proprietor: Tungaloy Corporation, Iwaki-shi Fukushima 970-1144 (JP)
(72) Inventor: SUZUKI, Yusuke, Fukushima, 9701144 (JP)
(74) Representative: Vossius & Partner Patentanwälte Rechtsanwälte mbB

(56) References cited:
- EP-A2- 0 245 225
- CN-U- 206 083 881
- GB-A- 350 706
- JP-A- 2001 259 904
- JP-A- 2016 055 360
- JP-A- 2017 193 001

## Description

### Background

### Field

The present invention relates to a cutting insert.

### Description of Related Art

One of requests to improve a cutting insert for back turning used in an automatic lathe relates to chip control (see, e.g., JP 2019 104088 A).
JP 2016 055 360 A discloses a cutting tool for backgrinding including a cutting tip having a rake face and an end face side cutting edge.
JP 2017 193001 A discloses a cutting insert having a first cutting edge being formed at a front end face, a second cutting edge being formed at one side face and a side ridge portion being formed at an opposite side face. The side ridge portion has a recessed portion recessed toward the first cutting edge when viewed from a direction facing the end face.

### Summary

Back turning has a characteristic in which chips tend to be lengthened, and there are cases where the lengthened chips come into contact with a machined surface of a workpiece to roughen the machined surface. In particular, in the case of the back turning, a groove end surface formed during groove machining and an outer diameter surface formed during outer diameter machining serve as machined surfaces, and hence management of chips at a particularly high level is required.

The present invention has been made in order to solve such a problem, and provides a cutting insert having a low possibility that chips roughen a machined surface of a workpiece in back turning.

A cutting insert of the present invention is defined in the claim. According to the thus configured cutting insert, during outer diameter machining in which chips tend to be lengthened relatively and a depth of cut is large, a decentered inflection portion is caused to occur in a cross section of the chips, and its stiffness acts so as to prevent torsion of the chips. With this, it becomes easy for a force which the chips receive when the chips collide with a breaker wall surface to act as a force for bending the chips instead of facilitating the torsion of the chips. By such a bending force, the generated chips are broken finely. The chips which are finely broken are less likely to roughen the machined surface than lengthened spiral chips.

According to the present invention, it is possible to provide the cutting insert having a low possibility that the chips roughen the machined surface of the workpiece in back turning.

### Brief Description of Drawings

FIG. 1 is an overall perspective view of a cutting tool to which a cutting insert according to the present embodiment is mounted;
FIG. 2A is a view for explaining machining processes of cutting;
FIG. 2B is a view for explaining machining processes of the cutting;
FIG. 3 is an overall perspective view of the cutting insert;
FIG. 4A is a partially enlarged view of an edge portion of the cutting insert;
FIG. 4B is a partially enlarged view of the edge portion of the cutting insert;
FIG. 5 is part of a top view of the cutting insert;
FIG. 6 is a partially enlarged view showing a surrounding area of a main cutting edge;
FIG. 7 is a view for explaining chips generated by the main cutting edge;
FIG. 8 is a cross-sectional view passing through the main cutting edge; and
FIG. 9 is a partially enlarged view showing a surrounding area of a front cutting edge.

### Detailed Description

An embodiment of the present invention will be described with reference to the accompanying drawings. In the individual drawings, components provided with the same reference numerals have the same or similar configurations. In addition, in the individual drawings, in the case where a plurality of structures having the same or similar configurations are present, there are cases where part of the structures are provided with reference numerals and providing the other structures with the same reference numerals is omitted in order to avoid complication. Further, all configurations described in the embodiment are not necessarily essential as means for solving the problem.

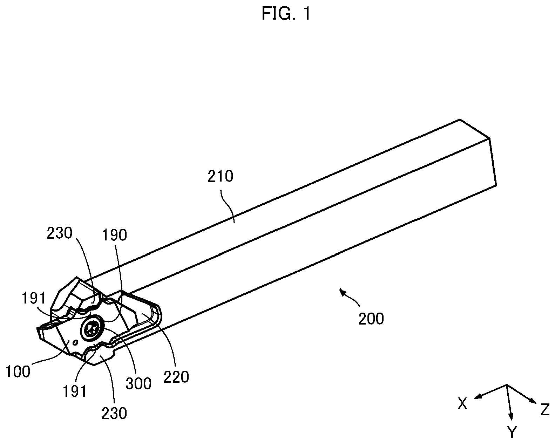

FIG. 1 is an overall perspective view of a cutting tool 200 to which a cutting insert 100 according to the present embodiment is mounted. The cutting tool 200 in the present embodiment is a cutting tool for a lathe, and is used especially in back turning. A main body portion 210 has a mounting seat 220 to which the cutting insert 100 is mounted, and two holding portions 230 which hold the cutting insert 100 between the holding portions 230.

The mounting seat 220 is a mounting surface for the cutting insert 100 which is provided in the vicinity of a tip of the main body portion 210. A female screw hole is provided in the mounting seat 220 and, when the cutting insert 100 is mounted, the female screw hole is coaxial with a mounting hole 190 provided substantially at the center of the cutting insert 100. The cutting insert 100 is fixed to the mounting seat 220 by a mounting screw 300 which is screwed into the female screw hole via the mounting hole 190.

The two holding portions 230 have shapes which swell from the mounting seat 220 and protrude in a direction in which the holding portions 230 face each other. When the cutting insert 100 is placed on the mounting seat 220, two concave portions 191 provided so as to face a middle portion of the cutting insert 100 are fitted on the holding portions 230, and prevent rotational runout of the cutting insert 100.

Note that an X axis, a Y axis, and a Z axis are determined in a manner shown in the drawing. That is, a direction in which the holding portions 230 hold the cutting insert 100 between the holding portions 230 is a Y axis direction, a direction of the mounting hole 190 when the cutting insert 100 is mounted to the mounting seat 220 is a Z axis direction, and a direction orthogonal to the Y axis direction and the Z axis direction is an X axis direction. In the drawings shown below, by writing similar coordinate axes having, as a reference, a state in which the cutting insert 100 is mounted as shown in FIG. 1, the directions of structures represented in the individual drawings are shown.

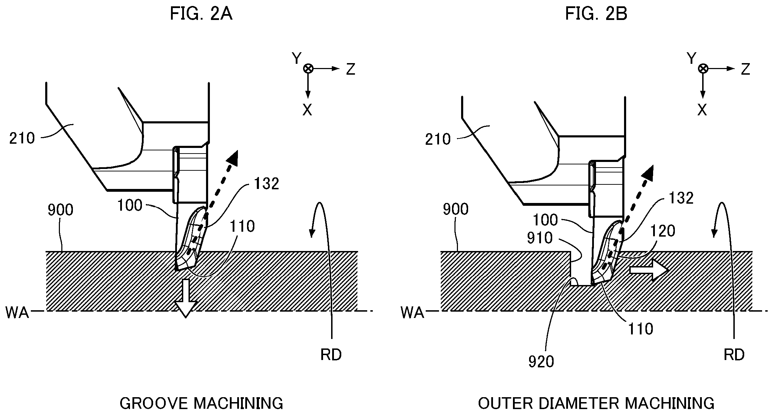

FIGS. 2A and 2B are views for explaining machining processes of cutting. Specifically, FIG. 2A shows a state of groove machining, and FIG. 2B shows a state of outer diameter machining (back turning). In each machining, a workpiece 900 is fixed to a chuck of a lathe, and is rotated in a direction of an arrow RD about a rotation axis WA.

In the groove machining shown in FIG. 2A, as indicated by an open arrow, the cutting insert 100 fixed to the main body portion 210 is fed toward the rotation axis WA of the workpiece 900, and a front cutting edge 110 which acts mainly in the feed direction cuts the workpiece 900 to form a groove. Chips generated by cutting by the front cutting edge 110 are guided by a breaker groove surface 132 and discharged to the outside toward a direction of a dotted arrow.

When a target depth is reached and the groove machining is ended, outer diameter machining is continuously performed. In the outer diameter machining shown in FIG. 2B, as indicated by an open arrow, the cutting insert 100 is fed along the direction of the rotation axis WA of the workpiece 900, and a main cutting edge 120 which acts mainly in the feed direction cuts the workpiece 900 to extend the groove in a direction of back turning. Chips generated by cutting by the main cutting edge 120 are guided by the breaker groove surface 132 and discharged to the outside toward a direction of a dotted arrow.

By such machining processes, a groove end surface 910 and an outer diameter surface 920 are formed in the workpiece 900. Note that a cutting edge which finishes the outer diameter surface 920 is the front cutting edge 110 also in the outer diameter machining. The groove end surface 910 and the outer diameter surface 920 formed in this manner are machined surfaces by the cutting insert 100. In the cutting insert 100 according to the present embodiment, the shapes of the front cutting edge 110 and the main cutting edge 120 are devised such that generated chips are prevented from coming into contact with the machined surfaces to roughen the machined surfaces. Hereinbelow, a description will be made sequentially.

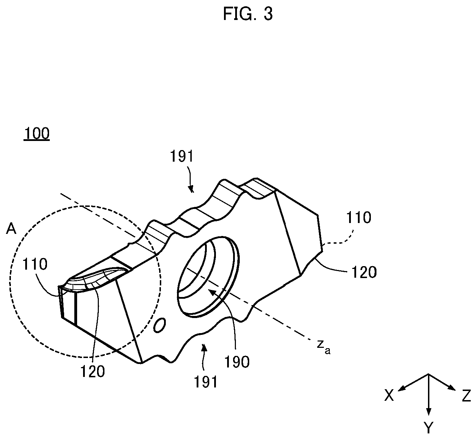

FIG. 3 is an overall perspective view of the cutting insert 100. The cutting insert 100 has, as an overall shape, a substantially plate-shaped parallelogram, and the mounting hole 190 into which the mounting screw 300 is to be inserted is provided at the center of the cutting insert 100. In a vertical direction (Y axis direction) of the mounting hole 190, as described above, the concave portions 191 in which the holding portions 230 of the mounting seat 220 are fitted are provided.

The front cutting edge 110 and the main cutting edge 120 are provided at end portions of upper and lower sides which intersect the hypotenuse in the overall shape which is substantially the parallelogram so as to form an acute angle. That is, two combinations of the front cutting edges 110 and the main cutting edges 120 are provided for one cutting insert 100. In the case where the cutting edges of one combination reach the limit of use, it is possible to use the cutting edges of the other combination by rotating the cutting insert 100 by 180° about a central axis zₐ of the mounting hole 190 and mounting the cutting insert 100 again.

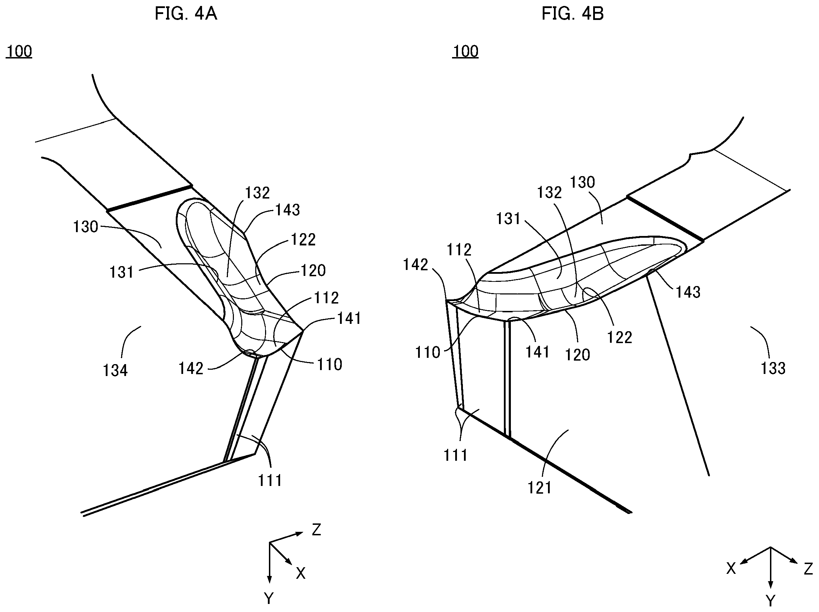

FIGS. 4A and 4B are partially enlarged views of an edge portion of the cutting insert 100. Specifically, FIGS. 4A and 4B are enlarged views of an A portion in FIG. 3, FIG. 4A is a perspective view when the A portion is observed from the side of the mounting surface in the case where the cutting insert 100 is mounted to the mounting seat 220, and FIG. 4B is a perspective view when the A portion is observed from the side of a surface opposite to the side of the mounting surface.

As a whole, the front cutting edge 110 and the main cutting edge 120 are surrounded by an upper surface 130 parallel to an XZ plane, and four peripheral side surfaces which intersect the upper surface 130 at an angle close to 90 degrees. The four peripheral side surfaces include a first side surface 133 which constitutes a surface opposite to the mounting surface which comes into contact with the mounting seat 220, a main cutting edge flank 121 which is continuous with the first side surface 133 and functions as a flank for the main cutting edge 120, a front cutting edge flank 111 which is continuous with the main cutting edge flank 121 and functions as a flank for the front cutting edge 110, and a second side surface 134 which is continuous with the front cutting edge flank 111 and constitutes the mounting surface which comes into contact with the mounting seat 220. Note that, in the present embodiment, while the main cutting edge flank 121 and the front cutting edge flank 111 are connected by an R curved surface, the front cutting edge flank 111 and the second side surface 134 are connected by an R curved surface, and the front cutting edge flank 111 is constituted by two flat surfaces, the use of these configurations is optional.

A concave portion which functions as a chip breaker is provided so as to be dug from the upper surface 130. Specifically, the concave portion is constituted by a side rake surface 122, a front rake surface 112, a breaker wall surface 131, and the breaker groove surface 132 which are curved surfaces. The main cutting edge 120 is formed on a ridge of the main cutting edge flank 121 and the side rake surface 122. The front cutting edge 110 is formed on a ridge of the front cutting edge flank 111 and the front rake surface 112.

A first corner 141 is a boundary point between the main cutting edge 120 and the front cutting edge 110. A second corner 142 is one of both ends of the front cutting edge 110 on a side opposite to the side of the first corner 141. A third corner 143 is one of both ends of the main cutting edge 120 on a side opposite to the side of the first corner 141. That is, a ridge from the first corner 141 to the second corner 142 is an effective edge range of the front cutting edge 110, and a ridge from the first corner 141 to the third corner 143 is an effective edge range of the main cutting edge 120. The effective edge range is a range which functions as a cutting blade. The cutting blade may be formed by cutting. The main cutting edge 120 and the front cutting edge 110 are provided to be continuous with each other with the first corner 141 positioned between them, and an extension direction of the main cutting edge 120 and an extension direction of the front cutting edge 110 form an obtuse angle at the first corner 141.

In the present embodiment, the R curved surface is provided between the front cutting edge flank 111 and the main cutting edge flank 121, and hence the first corner 141 is positioned on the ridge of the R curved surface and the concave portion. Herein, the first corner 141 is defined as the middle point on the ridge. In addition, the R curved surface is provided between the front cutting edge flank 111 and the second side surface 134 and, similarly to the first corner 141, the second corner 142 is defined as the middle point on the ridge of the R curved surface and the concave portion. Note that, in the case where the R curved surface is not provided, each corner may be simply defined as a point at which adjacent ridges intersect each other.

The side rake surface 122 and the front rake surface 112 are positioned adjacent to each other, and constitute an inclined surface which descends toward the breaker groove surface 132. The breaker groove surface 132 constitutes a substantially J-shaped groove bottom surface which is continuously extended from a portion positioned adjacent to the side rake surface 122 to a portion positioned adjacent to the front rake surface 112. The breaker wall surface 131 constitutes a wall surface which is continuous with the breaker groove surface 132 and rises up to a boundary with the upper surface 130 and, similarly to the breaker groove surface 132, the breaker wall surface 131 has a substantially J shape.

Chips generated by cutting by the front cutting edge 110 slide on the front rake surface 112, collide with the breaker groove surface 132, and are discharged to the outside along the breaker groove surface 132 as shown in FIGS. 2A and 2B while being broken intermittently by a force of the collision. Similarly, chips generated by cutting by the main cutting edge 120 slide on the side rake surface 122, collide with the breaker groove surface 132, and are discharged to the outside along the breaker groove surface 132 as shown in FIGS. 2A and 2B while being broken intermittently by a force of the collision.

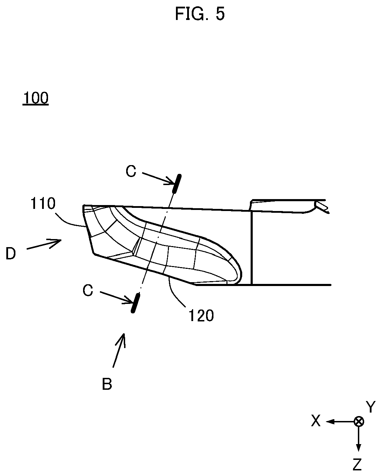

FIG. 5 is part of a top view of the cutting insert 100. Features of the cutting insert 100 will be described sequentially by using a view seen from a direction of an arrow B which has the main cutting edge 120 at the front, a cross-sectional view taken along the line C-C which is cut with a plane orthogonal to the main cutting edge 120, and a view seen from a direction of an arrow D which has the front cutting edge 110 at the front.

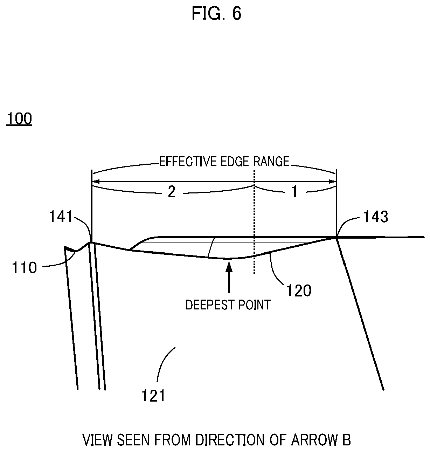

FIG. 6 is the view seen from the direction of the arrow B in FIG. 5, and is a partially enlarged view showing a surrounding area of the main cutting edge 120. As shown in the drawing, the main cutting edge 120 is curved into a U shape over the entire length of the effective edge range. In addition, the deepest point serving as the bottom of the U shape is positioned in a range closer to the side of the first corner 141 than a position which divides a straight line connecting the first corner 141 and the third corner 143 which are both ends of the main cutting edge 120 at a ratio of 2 : 1 from the side of the first corner 141. Further, the deepest point is preferably positioned in a range closer to the side of the third corner 143 than a position which divides the straight line connecting the first corner 141 and the third corner 143 at a ratio of 1 : 1. It is only required that, as a whole, the U-shaped curve is concave downward, and the entire curve may be constituted by a curved line, or the curve may partially include a straight line.

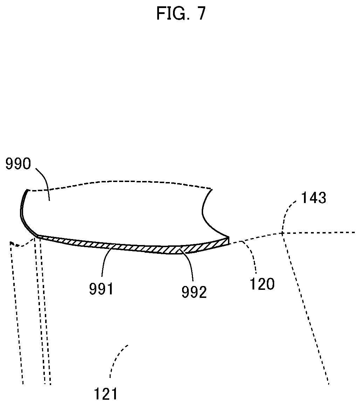

FIG. 7 is a view for explaining chips 990 generated by the main cutting edge 120. Herein, a case is assumed in which a depth of cut to a workpiece is set to be larger than the deepest point of the U shape of the main cutting edge 120.

With regard to the chips 990 generated by the main cutting edge 120 which is curved into the U shape, in a cross section 991, a portion corresponding to the deepest point of the U shape serves as an inflection portion 992. That is, in the cross section 991, the inflection portion 992 appears at a position close to the third corner 143. Stiffness generated by curving of the cross section 991 acts so as to prevent torsion which occurs in a direction in which the chips 990 move toward the breaker wall surface 131. With this, it becomes easy for a force which the chips 990 receive from the breaker wall surface 131 when the chips 990 collide with the breaker wall surface 131 to act as a force for bending the chips 990 instead of facilitating the torsion of the chips 990. By such a bending force, the generated chips 990 are broken finely. The chips 990 which are broken finely are less likely to roughen a machined surface than lengthened spiral chips.

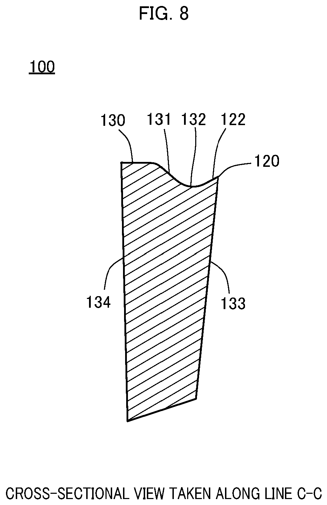

FIG. 8 is the cross-sectional view taken along the line C-C in FIG. 5. As shown in the drawing, in the concave portion, the side rake surface 122, the breaker groove surface 132, and the breaker wall surface 131 are consecutively connected to the upper surface 130. As described above, the chips 990 having the curved cross section collide with the breaker wall surface 131 and are broken intermittently. Then, the chips 990 are pushed by chips generated from the side of the front cutting edge 110, and are discharged to the outside along the breaker groove surface 132 together with the chips generated from the side of the front cutting edge 110.

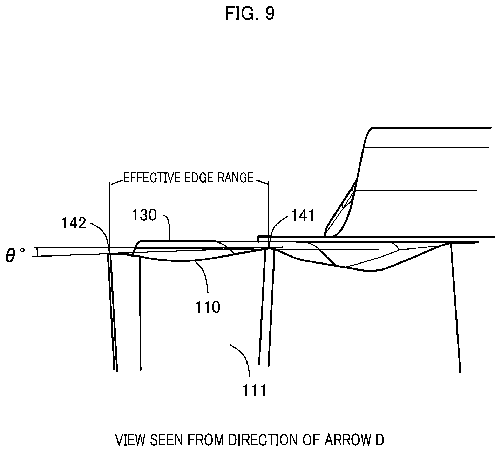

FIG. 9 is the view seen from the direction of the arrow D in FIG. 5, and is a partially enlarged view showing a surrounding area of the front cutting edge 110. As shown in the drawing, the front cutting edge 110 is also curved into a U shape over the entire length of the effective edge range. The front cutting edge 110 performs cutting of a workpiece by using the entire effective edge range in many cases in machining processes, and hence chips having a curved cross section are almost always generated. The chips having the curved cross section are less likely to cause torsion than chips having a cross section which is not curved, and are broken more easily than the chips having the cross section which is not curved.

In addition, a straight line connecting the first corner 141 and the second corner 142 which are both ends of the front cutting edge 110 has an inclination angle of θ° toward the side of a deep portion of the U shape with respect to a straight line which is parallel to the central axis zₐ of the mounting hole 190 and passes through the end on the side of the first corner 141. In other words, the straight line connecting the first corner 141 and the second corner 142 has an intersection angle of θ° with respect to the direction of the rotation axis WA of the workpiece 900 such that the end on the side of the first corner 141 corresponds to an upstream side of rotation of the workpiece 900. 8 is not less than 2 and not more than 8, and is preferably not less than 3.5 and not more than 8. When such an inclination angle is provided, it follows that the front cutting edge 110 cuts the workpiece 900 from the side of the first corner 141, and hence chips are discharged in a direction away from the machined surface naturally. That is, it is possible to reduce a possibility that the machined surface is roughened.

While an example of the present embodiment has been described thus far, the present invention is not limited to the above embodiment, and can be variously modified without departing from the scope of the invention as defined by the claim.

## Claims

1. A cutting insert (100) comprising:
a rake surface (112, 122);
a peripheral side surface;
a front cutting edge (110) which is provided on a ridge of the rake surface (112) and the peripheral side surface; and
a main cutting edge (120) which is provided on the ridge so as to be continuous with the front cutting edge (110), and has an extension direction which forms an obtuse angle with an extension direction of the front cutting edge, wherein
the main cutting edge (120) is curved into a U shape over an entire length of an effective edge range which functions as a cutting blade, and a deepest point of the U shape is positioned in a range closer to a side of a first corner (141) than a position which divides a straight line connecting both ends of the main cutting edge (120) at a ratio of 2 : 1 from the side of the first corner (141) positioned adjacent to the front cutting edge (110); wherein
the front cutting edge (110) is provided to be curved into a U shape over an entire length of an effective edge range which functions as a cutting blade; and
wherein
a straight line connecting both ends of the front cutting edge (110) has an inclination angle (θ) of not less than 2° and not more than 8° toward a side of a deep portion of the U shape with respect to a straight line which is parallel to a central axis (zₐ) of a mounting hole (190) for mounting to a cutting tool (200) and passes through the end on the side of the first corner (141).

## Patentansprüche

1. Schneideinsatz (100) aufweisend:
eine Spanfläche (112, 122);
eine periphere Seitenfläche;
eine vordere Schneidekante (110), die an einem Grat der Spanfläche (112) und der peripheren Seitenfläche bereitgestellt ist; und
eine Hauptschneidekante (120), die an dem Grat bereitgestellt ist, um mit der vorderen Schneidekante (110) kontinuierlich zu sein, und eine Erstreckungsrichtung hat, die einen stumpfen Winkel mit einer Erstreckungsrichtung der vorderen Schneidekante bildet, wobei
die Hauptschneidekante (120) über eine gesamte Länge eines effektiven Kantenbereichs, der als ein Schneidblatt wirkt, in eine U-Form gebogen ist, und ein tiefster Punkt der U-Form in einem Bereich angeordnet ist, der näher an einer Seite einer ersten Ecke (141) ist als eine Position, die eine gerade Linie, die beide Enden der Hauptschneidekante (120) verbindet, in einem Verhältnis 2:1 teilt, betrachtet von der Seite der ersten Ecke (141) aus, die angrenzend an die vordere Schneidekante (110) angeordnet ist; wobei
die vordere Schneidekante (110) bereitgestellt ist, um über eine gesamte Länge eines effektiven Kantenbereichs, der als ein Schneidblatt wirkt, in eine U-Form gebogen zu sein; und wobei
eine gerade Linie, die beide Enden der vorderen Schneidekante (110) verbindet, hin zu einer Seite eines tiefen Teils der U-Form einen Neigungswinkel (θ) von nicht weniger als 2° und nicht mehr als 8° Grad aufweist bezüglich einer geraden Linie, die parallel zu einer zentralen Achse (zₐ) eines Montagelochs (190) zum Montieren eines Schneidewerkzeugs (200) ist und durch das Ende der Seite der ersten Ecke (141) hindurchgeht.

## Revendications

1. Plaquette de coupe (100) comprenant:
une face de coupe (112, 122);
une surface latérale périphérique;
une arête de coupe avant (110) qui est disposée sur une saillie de la face de coupe (112) et la surface latérale périphérique; et
une arête de coupe principale (120) qui est disposée sur la saillie de manière à être continue avec l'arête de coupe avant (110), et a une direction d'extension qui forme un angle obtus avec une direction d'extension de l'arête de coupe avant, dans laquelle
l'arête de coupe principale (120) est incurvée en forme de U sur toute une longueur d'une plage d'arête effective qui fonctionne comme une lame de coupe, et un point le plus profond de la forme en U est positionné dans une zone plus proche d'un côté d'un premier coin (141) qu'une position qui divise une ligne droite reliant les deux extrémités de l'arête de coupe principale (120) à un rapport de 2:1 depuis le côté du premier coin (141) positionné de manière adjacente à l'arête de coupe avant (110); dans laquelle
l'arête de coupe avant (110) est disposée pour être incurvée en forme de U sur toute une longueur d'une plage d'arête effective qui fonctionne comme une lame de coupe; et dans laquelle
une ligne droite reliant les deux extrémités de l'arête de coupe avant (110) a un angle d'inclinaison (θ) pas inférieur à 2° et pas supérieur à 8° vers un côté d'une partie profonde de la forme en U par rapport à une ligne droite qui est parallèle à un axe central (zₐ) d'un trou de fixation (190) pour la fixation sur un outil de coupe (200) et passe par l'extrémité sur le côté du premier coin (141).
